# EUROPEAN PATENT SPECIFICATION

(11) **EP 3 571 762 B1**
(45) Date of publication and mention of the grant of the patent: **18.11.2020**
(21) Application number: 18711156.2
(22) Date of filing: 19.01.2018
(51) Int. Cl.: H02S 30/10, H02S 20/30, H02S 20/10

(54) **MOORING SYSTEM FOR A PHOTOVOLTAIC FLOATING PLATFORM**
VERANKERUNGSSYSTEM FÜR EINE FOTOVOLTAISCHE SCHWIMMENDE PLATTFORM
SYSTÈME D'AMARRAGE POUR PLATE-FORME PHOTOVOLTAÏQUE FLOTTANTE

(30) Priority: 20.01.2017 PT 2017109867
(43) Date of publication of application: 27.11.2019
(73) Proprietor: Solarisfloat, LTA., 455-466 Matosinhos (PT)
(72) Inventor: CORREIA, Nuno, 4200-465 Porto (PT); GOMES, Carla, 4200-465 Porto (PT); PINTO, Ricardo, 4200-465 Porto (PT); PINA, Luis, 4200-465 Porto (PT); MOITA, Nuno, 4200-465 Porto (PT); TEIXEIRA DA SILVA, Jorge, 4200-465 Porto (PT)
(74) Representative: Ferreira, Maria Silvina
(86) International application number: PCT/IB2018/050342
(87) International publication number: WO 2018/134779

(56) References cited:
- WO-A1-2010/026542
- WO-A1-2012/131543
- WO-A1-2014/016508
- WO-A1-2016/108561
- CN-A- 105 227 063
- FR-A1- 2 968 267

## Description

### Technical Field

The present application describes a mooring system for a photovoltaic floating platform.

### Background art

The document WO 2014/016508 describes a mooring system which consists of several anchors, located at each node or vertice of each panel cell, disregarding the whole geometry of the platform, in a way that the platform is fixed to a certain point. Due to the use of several anchor points, there is no rotational freedom of the platform and this system's complexity increases exponentially with the increase of the installation's overall size.

The document FR 2968267 describes a mooring system used for floating solar panel platforms which consists of a single central mast, anchored to the bottom of the water basin, with a ring which is then connected to the platform. Such ring can travel upwards or downwards through the mast, simulating the movement of a piston. These characteristics allow for usage in a situation where the water level varies considerably, although it restricts planar movement.

The document WO 2012/131543 A1 describes a floating platform designed for energy production with the use of photovoltaic solar panels, by using a free-floating circular platform that is circumscribed by a fixed floating structure, which is then anchored to the bottom of the basin. The described system uses a plurality of actuators that are fixed to the rotating platform and, when actuated, secure the rotating platform in one of several predefined positions. The rotating platform can rotate freely over a predefined axis on one direction of rotation through the use of propellers, and the mooring system used in the placement of the fixed floating structure comprises one or several anchors or chains. As such, the free-floating platform can only rotate in one direction and its orientation is defined by one of the predefined fixed positions.

The document WO2010/026542 A1 describes a floating structure designed for energy production using photovoltaic solar panels with a film of water above the surface of the panels. The mooring system used in the anchoring of the described platform relies on a rope or chain connected to an anchor, which guarantees the correct placement of the platform.

### Summary

The present application describes a mooring system for a photovoltaic floating platform characterized by comprising:
- An outer floating structure comprising at least four connection ports;
- An inner floating structure place inside of the outer floating structure;
- A rotating floating platform, supporting a photovoltaic system, connected to and placed inside of the inner floating structure, comprising at least four rotation mechanism, causing the inner floating structure to rotate in solidarity with the rotating floating platform;
- A central floating component placed in the center of the rotating floating platform, comprising an anchor to attach said component to the bottom of a basin;
- A set of at least eight anchors attached to the at the least four connection ports of the outer floating structure by means of a flexible connection element;
Wherein, the inner floating structure comprises at least four stabilizer tubes, installed underwater in its bottom surface, at equidistant points in said structure, said stabilizer tubes protruding outwards the outer floating structure.

In on embodiment of the System, the outer floating structure and the inner floating structure are of a circular shape.

In another embodiment of the System, the stabilizer tubes protrudes outwards the outer floating structure forming an imaginary circle with a diameter at least 5% greater than the diameter of the outer floating structure.

In another embodiment of the System, the connection ports are positioned at equidistant points along the outer floating structure.

In another embodiment of the System, the connection port is a swivel.

In another embodiment of the System, the connection between inner floating structure and rotating floating platform is provided by means of a flexible connection element.

In another embodiment of the System, the central floating component additionally comprises a connection ring in its exterior, providing the connection to the rotating floating platform by means of a flexible connection element.

In another embodiment of the System, the flexible connection element is a rope or a cable.

In another embodiment of the System, the at least four rotation mechanisms are placed at equidistance edges of the rotating floating platform.

In another embodiment of the System, the rotation mechanism comprises a motor and a propeller.

### General description

The present application describes a mooring system for a photovoltaic floating platform.

The mooring system herein described presents features beyond the typical ones of such systems, allowing for not only the correct positioning of a photovoltaic system, in respect to a predefined geographical position, but also the ability to adapt its position when installed in locations where the surface level changes frequently and considerably, such as reservoirs and dams.

Another important characteristic of the system described is that it allows for the assembly of a free-rotating platform in both the clockwise and counter clockwise directions, with its central component acting as an axis of rotation for the attached platform. The proposed system was developed under specific principles that ensure the stabilization of the photovoltaic system and the rotation of the inner floating platform that supports it.

The mooring system is comprised by a system of anchors attached to the bottom of the basin, which are then connected by means of a flexible connection element, such as a rope or cable, to an outer floating structure, preferably of circular shape with a predefined diameter, using connection ports, e.g. swivels. Said outer structure contains in its interior a floating structure that surrounds an inner rotating floating platform which rotates around a central floating component. This central floating component is also connected to an anchor at the bottom of the basin through a flexible connection element such as a rope or a cable.

More specifically, the system can be broken down into three main components: an (i) outer floating structure, an (ii) inner floating structure placed inside of the outer floating structure, and surrounding a rotating floating platform and a (iii) central floating component in the center of the outer floating structure, acting as an axis of rotation for the pair inner floating structure and rotating floating platform.

The outer floating structure is attached, by means of at least four connection ports, to a system of anchors comprised by at least eight anchors. Said connection ports are positioned at equidistant points along the outer structure causing the anchors therein connected to form an imaginary circle of greater diameter on opposite ends, defining and fixing the position of the entire platform on the water surface. Said imaginary circle can be derived from the signalling buoys that identifies the position of each anchor. The configuration of the system of anchors defines that each connection port at the outer surface is moored to two anchors at the bottom of the basin, by means of its respective flexible connection elements. This configuration improves the distribution of the flexible connection elements' traction forces that fix the outer floating structure. The outer floating structure can be of a circular shape, and floats at the water level, being made out of a suitable polymer material.

The inner floating structure is placed inside the outer floating surface, being therefore, preferentially, of the same geometric shape and with a diameter smaller than the outer surface. Said inner floating structure is made of the same polymer material as the outer structure and surrounds a rotating floating platform of the same geometric shape. Both elements are connected to each other by means of a flexible connection element, causing the inner floating structure to rotate in solidarity with the rotating floating platform.

The rotating floating platform is constructed of a polymer material, being adapted to support the installation of photovoltaic system in its top surface. Because of that purpose, and in order to take advantage of the variable solar exposition along the day, there is no physical connection between the outer structure and the pair - inner floating structure and rotating floating platform - allowing the second to freely rotate within the first, maintaining a fixed geographical point defined by the position of the outer structure.

In at least four predefined positions at equidistance edges of the rotating floating platform, are installed rotation mechanisms comprised by a motor with propeller, allowing the rotational movement clockwise or counter clockwise of the pair, inside the outer floating structure. In order to ensure that the rotational movement of the pair is not constrained and is a planar movement parallel to the water surface, the bottom surface of the inner floating structure - underwater - comprises at least four stabilizer tubes, placed at equidistant points in said structure, that protrude outwards forming an underwater imaginary circle which is of greater diameter than the outer floating structure. Said tubes are of a polymer material. This arrangement with stabilizer tubes ensures also that the pair remains in the interior of the outer surface structure in the event of strong undulation or very windy conditions.

The center of the rotating floating platform is defined by a central floating component. The central floating component acts as an axis of rotation for the pair inner floating structure and rotating floating platform, having an interior compartment which is kept dry and designed to accommodate the control equipment and electronic systems required to operate the energy production system installed on the top of the rotating floating platform. The central floating component also comprises an exterior connection ring that provides the connection with the rotating floating platform using connection means such as ropes and/or cables.

The anchors and the flexible connection elements of the mooring system, such as ropes or cables, are chosen of suitable materials, such as Nylon and High Density Polyethylene, and designed for the proposed application, taking into account the dynamic requirements of the complete floating platform. The placement of these anchors and the length of the ropes or cables thus defines a fixed position for the system.

Due to the mooring solution being based on flexible connection elements, such as ropes or cables, the resulting floating platforms can be positioned in any basin where the water level changes.

This solution also allows the outer floating structure to be connected to each other, forming a network mooring system.

### Brief description of drawings

For easier understanding of this application, figures are attached in the annex that represent the preferred forms of implementation which nevertheless are not intended to limit the technique disclosed herein.

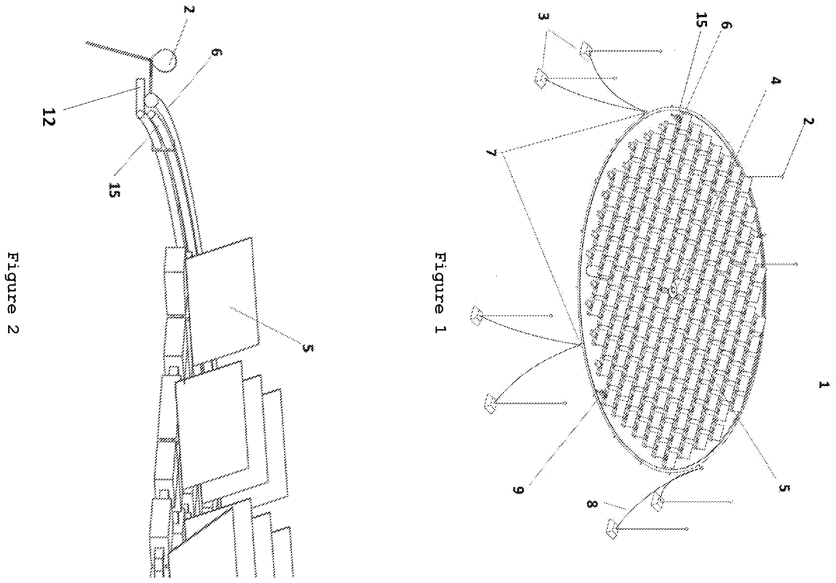

**Figure 1****:** Schematic representation of the complete mooring system (1), where the reference numbers represent:
   2 - Signalling Buoy;
   3 - Anchor;
   4 - Central floating component;
   5 - Rotating floating platform;
   6 - Outer floating structure;
   7 - Outer floating structure connection port;
   8 - Flexible connection element;
   9 - Rotation mechanism;
   15 - Inner floating structure.
**Figure 2****:** Schematic representation of a cut view, highlighting the outer floating structure (6) and the inner floating structure (15), where the reference numbers represent:
   2 - Signalling Buoy;
   5 - Rotating floating platform;
   6 - Outer floating structure;
   15 - Inner floating structure.

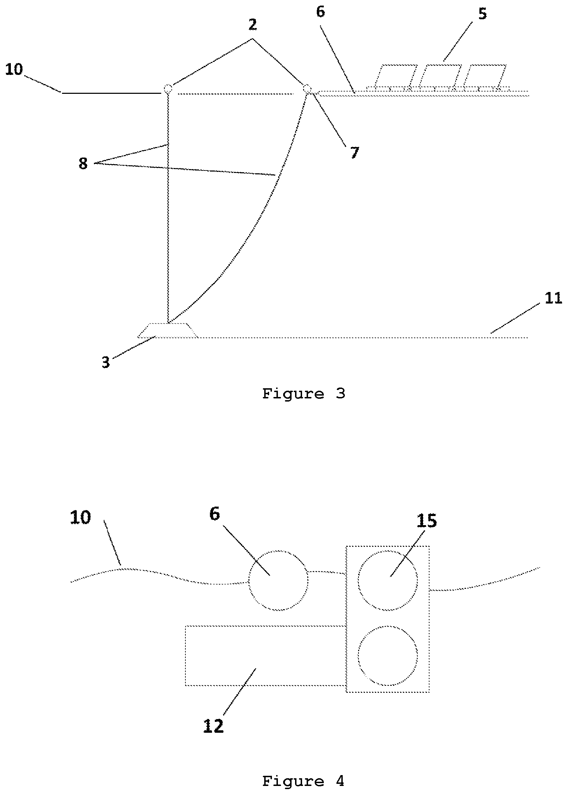

**Figure 3****:** Schematic representation of the mooring system, where the reference numbers represent:
   2 - Signalling Buoy;
   3 - Anchor;
   5 - Rotating floating Platform;
   6 - Outer floating structure;
   7 - Outer floating structure connection port;
   8 - Flexible connection element;
   10 - Water Surface;
   11 - Bottom of the basin.
**Figure 4****:** Schematic cross-section representation of the mooring system, where the reference numbers represent:
   6 - Outer floating structure;
   10 - Water Surface;
   12 - Stabilizer tube;
   15 - Inner floating Structure.

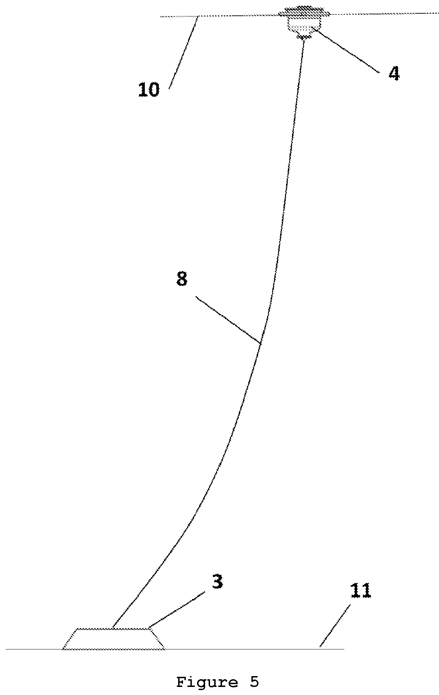

**Figure 5****:** Schematic representation of the central floating component (4) and its mooring system, where the reference numbers represent:
   3 - Anchor;
   4 - Central floating component;
   8 - Flexible connection element;
   11 - Bottom of the basin.

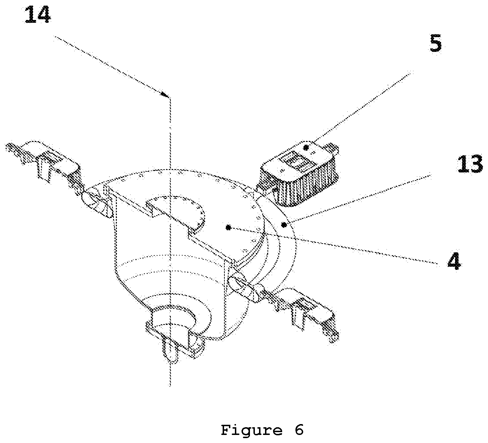

**Figure 6****:** Schematic representation of the central floating component, where the reference numbers represent:
   4 - Central floating component;
   5 - Rotating floating platform;
   13 - Connection ring;
   14 - Rotating floating platform rotation axis.

### Description of embodiments

Now, preferred embodiments of the present application will be described in detail with reference to the annexed drawings. However, they are not intended to limit the scope of this application.

In a particular embodiment, the mooring system for a photovoltaic floating platform is comprised by an outer floating structure (6) with a predefined diameter, containing in its interior an inner floating structure (15) connected to a rotating floating platform (5) and a central floating component (4) in the center of the outer floating structure (6), acting as an axis of rotation (14) for the pair inner floating structure (15) and rotating floating platform (5).

The outer floating structure (6) ensures the fixation of the system to a specific geographic position, through the use of eight anchors (3) that are attached to four connection ports (7) positioned at equidistant points at the outer structure (6). Each connection port (7) is moored to two anchors (3) at the bottom of the basin (11), by means of its respective flexible connection elements (8).

The inner floating structure (15) is of a circular shape and has a diameter smaller than the outer structure (6) as to be contained on its interior. The inner structure (15) has in its interior a rotating floating platform (5) attached to it by means of flexible connection elements (8), having also a circular shape, and equipped with a rotation mechanism (9) comprised by motors and propellers, that grant it the ability to rotate in both directions (CW and CCW) around a predefined axis perpendicular to the water surface (10) - such axis is defined by the central floating component (4).

The bottom surface of the inner floating structure (15) comprises at least four stabilizer tubes (12), place at equidistant points in said structure (15), that protrude outwards forming an underwater imaginary circle, which is of greater diameter than the outer floating structure (6). Preferentially the imaginary circle formed by the stabilizer tubes (12) should have a diameter 5% greater than the diameter of the outer floating structure (6).

The central floating component (4) has a compartment in its inside, which is kept dry, designed to accommodate the control equipment and electronic systems required by said platform (5) to operate an energy production system installed on it, being able to be re-designed to fit any type of payload.

This description is of course not in any way restricted to the forms of implementation presented herein and any person with an average knowledge of the area can provide many possibilities for modification thereof without departing from the general idea as defined by the claims. The preferred forms of implementation described above can obviously be combined with each other. The following claims further define the preferred forms of implementation.

## Claims

1. A mooring system for a photovoltaic floating platform comprising:
- An outer floating structure (6) comprising at least four connection ports (7);
- An inner floating structure (15) placed inside of the outer floating structure (6);
- A rotating floating platform (5), supporting a photovoltaic system, connected to and placed inside of the inner floating structure (15),
- A set of at least eight anchors attached to the at the least four connection ports (7) of the outer floating structure (6) by means of a flexible connection element (8);
**characterized by** comprising:
- The rotating floating platform (5) comprises at least four rotation mechanism (9), causing the inner floating structure (15) to rotate in solidarity with the rotating floating platform (5);
- A central floating component (4) placed in the center of the rotating floating platform (5), comprising an anchor to attach said component (4) to the bottom of a basin (11);
Wherein, the inner floating structure (15) comprises at least four stabilizer tubes (12), installed underwater in its bottom surface, at equidistant points in said structure (15), said stabilizer tubes (12) protruding outwards the outer floating structure (6).

2. The mooring system, according to claim 1, wherein the outer floating structure (6) and the inner floating structure (15) are of a circular shape.

3. The mooring system according to claim 2, wherein the stabilizer tubes (12) protrudes outwards the outer floating structure (6) forming an imaginary circle with a diameter at least 5% greater than the diameter of the outer floating structure (6).

4. The mooring system, according to any of the previous claims, wherein the connection ports (7) are positioned at equidistant points along the outer floating structure (6).

5. The mooring system according to any of the previous claims, wherein the connection port (7) is a swivel.

6. The mooring system according to claim 1, wherein the connection between inner floating structure (15) and rotating floating platform (5) is provided by means of a flexible connection element (8).

7. The mooring system according to any of the previous claims, wherein the central floating component (4) additionally comprises a connection ring (13) in its exterior, providing the connection to the rotating floating platform (5) by means of a flexible connection element (8).

8. The mooring system according to any of the previous claims, wherein the flexible connection element (8) is a rope or a cable.

9. The mooring system according to any of the previous claims, wherein the at least four rotation mechanisms (9) are placed at equidistance edges of the rotating floating platform (5).

10. The mooring system according to any of the previous claims, wherein the rotation mechanism (9) comprises a motor and a propeller.

## Patentansprüche

1. Ein Verankerungssystem für eine schwimmende photovoltaische Plattform, bestehend aus:
- Einer äußeren schwimmenden Struktur (6), die mindestens vier Verbindungsanschlüsse (7) aufweist;
- Einer inneren schwimmenden Struktur (15), die sich innerhalb der äußeren schwimmenden Struktur (6) befindet;
- Einer drehbaren schwimmenden Plattform (5), die eine Photovoltaikanlage trägt und innerhalb der inneren schwimmenden Struktur (15) angeordnet und mit ihr verbunden ist,
- Einem Satz von mindestens acht Ankern, die an den mindestens vier Verbindungsanschlüssen (7) der äußeren schwimmenden Struktur (6) mittels eines flexiblen Verbindungselements (8) befestigt sind;
**dadurch gekennzeichnet, dass**:
- Die drehbare schwimmende Plattform (5) mindesten vier Drehmechanismen (9) aufweist, welche die Drehung der inneren schwimmenden Struktur (15) zusammen mit der drehbaren schwimmenden Plattform (5) bewirken;
- Ein zentrales schwimmendes Bauteil (4), das sich in der Mitte der drehbaren schwimmenden Plattform (5) befindet, einen Anker aufweist, um das besagte Bauteil (4) am Boden eines Beckens (11) zu befestigen;
Worin die innere schwimmenden Struktur (15) mindestens vier Stabilisierungsrohre (12) aufweist, welche an der Unterseite der besagten Struktur (15) in gleichmäßigen Abständen unter der Wasseroberfläche installiert sind, wobei die besagten Stabilisierungsrohre (12) über die äußere schwimmende Struktur (6) hinausragen.

2. Das Verankerungssystem gemäß Anspruch 1, worin die äußere schwimmende Struktur (6) und die innere schwimmenden Struktur (15) eine runde Form aufweisen.

3. Das Verankerungssystem gemäß Anspruch 2, worin die Stabilisierungsrohre (12) über die äußere schwimmende Struktur (6) hinausragen und einen gedachten Kreis mit einem Durchmesser bilden, der mindesten 5% größer als der Durchmesser der äußeren schwimmenden Struktur (6) ist.

4. Das Verankerungssystem gemäß einem der vorherigen Ansprüche, worin die Verbindungsanschlüsse (7) in gleichmäßigen Abständen um die äußere schwimmende Struktur (6) angeordnet sind.

5. Das Verankerungssystem gemäß einem der vorherigen Ansprüche, worin der Verbindungsanschluss (7) ein Drehgelenk ist.

6. Das Verankerungssystem gemäß Anspruch 1, worin die Verbindung zwischen der inneren schwimmenden Struktur (15) und der drehbaren schwimmenden Plattform (5) mittels eines flexiblen Verbindungselements (8) erfolgt.

7. Das Verankerungssystem gemäß einem der vorherigen Ansprüche, worin das zentrale schwimmende Bauteil (4) zusätzlich einen Anschlussring (13) an seiner Außenseite aufweist, der die Verbindung zur drehbaren schwimmenden Plattform (5) mittels eines flexiblen Verbindungselements (8)herstellt.

8. Das Verankerungssystem gemäß einem der vorherigen Ansprüche, worin das flexible Verbindungselement (8) ein Seil oder ein Kabel ist.

9. Das Verankerungssystem gemäß einem der vorherigen Ansprüche, worin die mindestens vier Drehmechanismen (9) gleichmäßig über die Kanten der drehbaren schwimmenden Plattform (5) verteilt sind.

10. Das Verankerungssystem gemäß einem der vorherigen Ansprüche, worin der Drehmechanismus (9) aus einem Motor und einem Propeller besteht.

## Revendications

1. Système d'amarrage pour plateforme flottante photovoltaïque comprenant :
- Structure flottante externe (6) comprenant au moins quatre ports de connexion (7) ;
- Structure flottante interne (15) placée à l'intérieur de la structure flottante externe (6) ;
- Plateforme flottante rotative (5), supportant un système photovoltaïque, connectée à et placée à l'intérieur de la structure flottante interne (15),
- Un ensemble d'au moins huit ancrages fixés aux au moins quatre ports de connexion (7) de la structure flottante externe (6) au moyen d'un élément de connexion flexible (8) ;
**caractérisé en ce qu'**il comprend :
- La plateforme flottante rotative (5) comprend au moins quatre mécanismes rotatifs (9), amenant la structure flottante interne (15) à tourner solidairement avec la plateforme flottante rotative (5) ;
- Élément flottant central (4) placé au centre de la plateforme flottante rotative (5), comprenant un ancrage pour attacher ledit élément (4) au fond d'un bassin (11) ;
dans lequel la structure flottante interne (15) comprend au moins quatre tubes stabilisateurs (12), installés sous l'eau dans sa surface de fond, à des points équidistants dans ladite structure (15), lesdits tubes stabilisateurs (12) faisant saillie à l'extérieur de la structure flottante externe (6).

2. Système d'amarrage, selon la revendication 1, dans lequel la structure flottante externe (6) et la structure flottante interne (15) sont de forme circulaire.

3. Système d'amarrage, selon la revendication 2, dans lequel les tubes stabilisateurs (12) font saillie à l'extérieur de la structure flottante externe (6) formant un cercle imaginaire avec un diamètre au moins 5% supérieur au diamètre de la structure flottante externe (6).

4. Système d'amarrage, selon l'une quelconque des revendications précédentes, dans lequel les ports de connexion (7) sont positionnés à des points équidistants le long de la structure flottante externe (6).

5. Système d'amarrage, selon l'une quelconque des revendications précédentes, dans lequel le port de connexion (7) est un pivot.

6. Système d'amarrage, selon la revendication 1, dans lequel la connexion entre la structure flottante interne (15) et la plateforme flottante rotative (5) est fournie au moyen d'un élément de connexion flexible (8).

7. Système d'amarrage, selon l'une quelconque des revendications précédentes, dans lequel l'élément flottant central (4) comprend en outre un anneau de connexion (13) dans son extérieur, fournissant la connexion à la plateforme flottante rotative (5) au moyen d'un élément de connexion flexible (8).

8. Système d'amarrage, selon l'une quelconque des revendications précédentes, dans lequel l'élément de connexion flexible (8) est une corde ou un câble.

9. Système d'amarrage, selon l'une quelconque des revendications précédentes, dans lequel les au moins quatre mécanismes rotatifs (9) sont placés à des côtés équidistants de la plateforme flottante rotative (5).

10. Système d'amarrage, selon l'une quelconque des revendications précédentes, dans lequel le mécanisme rotatif (9) comprend un moteur et un propulseur.
